# EUROPEAN PATENT SPECIFICATION

(11) **EP 2 095 886 B1**
(45) Date of publication and mention of the grant of the patent: **20.04.2016**
(21) Application number: 08016265.4
(22) Date of filing: 16.09.2008
(51) Int. Cl.: B07B 1/24, B07B 13/00, B07C 1/16, B07B 4/02, B07B 7/02

(54) **Paper sheet discriminating apparatus and paper sheet discriminating method**
Papierbogenunterscheidungsvorrichtung und Papierbogenunterscheidungsverfahren
Appareil de séparation de feuilles de papier et procédé de distinction de feuilles de papier

(30) Priority: 28.02.2008 JP 2008048415; 18.03.2008 JP 2008070046; 13.08.2008 JP 2008208537
(43) Date of publication of application: 02.09.2009
(73) Proprietor: Kabushiki Kaisha Toshiba, Minato-ku, Tokyo 105-8001 (JP)
(72) Inventor: Mori, Hidenari, Minato-ku Tokyo 105-8001 (JP); Tobayama, Kyouichi, Minato-ku Tokyo 105-8001 (JP)
(74) Representative: Hoffmann Eitle

(56) References cited:
- WO-A1-2004/024349
- DE-C1- 10 038 690
- GB-A- 824 565
- GB-A- 2 100 691

## Description

The present invention relates to a paper sheet discriminating apparatus, and a paper sheet discriminating method, applied to, for example, a mail processor and configured to discriminate mail pieces by the thickness.

In a mail processor, a plurality of types of mail pieces of different thicknesses that are supplied from a supply section are loaded into a discriminating apparatus and discriminated by the thickness. Thereafter, mail pieces of a desired thickness are conveyed, and sorted and stored in sorting boxes, based on their sorting information.

There is a known discriminating apparatus in which a discriminating region is defined by arranging elongated discriminating blades in a cylinder along the inner peripheral surface of a rotating drum with their transverse end portions superposed on one another with gaps between them.

In the discriminating apparatus, the discriminating blades are revolved around the center of the discriminating region as the rotating drum rotates, whereby those mail pieces which are thinner than the gaps, among a plurality of mail pieces of different thicknesses in the discriminating region, are passed through the gaps and discriminated (see, for example, JP2000255761 A)

If a large quantity of mail pieces are loaded in a lump into the discriminating region of the rotary discriminating apparatus described above, the lump of mail pieces cannot be broken even when the discriminating blades are revolved, so that the discrimination is difficult.

Conventionally, therefore, the chances of the mail pieces reaching the gaps between the discriminating blades of the discriminating apparatus are increased by increasing the length of the blades or the diameter of the discriminating region.

If the discriminating blades or the discriminating region is thus enlarged, however, the apparatus is increased in size and cost and requires a larger installation space.

GB 824 565 A describes a segregating apparatus in accordance with the preamble of claim 1 and a method in accordance with the preamble of claim 3. The apparatus comprises a drum-shaped receptacle supported for rotation about its axis. A peripheral wall of the drum is formed by a plurality of flaps, extending longitudinally of the drum and being pivotally supported, upon rings spaced longitudinally of the drum. The rings are supported upon rollers disposed so that the axis of the drum is inclined slightly downwardly towards one end thereof. An electric motor is drivingly connected to the rollers in order to rotate the

DE 100 38 690 C1 relates to a mail sorting drum. The rotating drum comprises a cylindrical frame and inner angled and overlapping swing blades. Two clamped membranes are fitted within the drum, fixed over each other. The membrane at the lower half of the drum is positioned at the side where the blades swing upwards. The membrane at the upper section of the drum is angled against the horizontal and against the direction of drum rotation, and is aligned to the surface of the lower membrane. The membranes are at an angle of 90° to each other, with an angle adjustment.

GB 2 100 691 A describes a mail discriminator. The mail discriminator comprises a one drum segregator having wide gauging slots between its slats which, in use, separates parcels from letters and packets, and another drum segregator having narrow gauging slots between its slats the other drum segregator being arranged downstream of the one drum segregator to receive letters and packets from the one drum segregator and, in use, to separate the packets from the letters. The one drum segregator may be located wholly within the other drum segregator or, alternatively, the two drum segregators may be remote from one another in which case, means are provided to collect the packets and letters from beneath the one drum segregator and transfer these to the inside of the other drum segregator.

WO 2004/024349 A1 describes a sorting drum at a mail sorting facility, in which items of mail are fed with the aid of a feed belt into one end wall of a rotating separation drum, where incoming items of mail are given a velocity and thus a spreading along the axial direction of the drum in that they are fed from the feed belt over a glide arrangement arranged extending into the drum and tilted downwards from the feed belt.

The present invention has been made in consideration of these circumferences, and its object is to provide a paper sheet discriminating apparatus and a paper sheet discriminating method, capable of increasing the discriminating capacity without increasing the apparatus size and of reducing the installation space as well as the equipment cost.

A paper sheet discriminating apparatus according to the invention is disclosed by the features of claim 1.

A paper sheet discriminating method according to the invention is disclosed by claim 3

According to the present invention, there are provided a paper sheet discriminating apparatus and a paper sheet discriminating method, capable of increasing the discriminating capacity without increasing the apparatus size and of reducing the installation space as well as the equipment cost.

The invention can be more fully understood from the following detailed description when taken in conjunction with the accompanying drawings, in which:
FIG. 1 is an exterior perspective view generally showing a mail processor;
FIG. 2 is a perspective view showing a letter discriminating apparatus of FIG. 1;
FIG. 3 is a side view showing a rotating drum of the letter discriminating apparatus of FIG. 2;
FIG. 4 is a front view showing the rotating drum of FIG. 3;
FIG. 5 is a view showing an arrangement configuration of discriminating blades of the rotating drum of FIG. 4;
FIG. 6 is a block diagram showing a drive control system of the letter discriminating apparatus of FIG. 2;
FIG. 7 is a view showing letters loaded in a lump into a discriminating region composed of the discriminating blades of FIG. 5;
FIG. 8 is a view showing how the lump of letters is broken in the discriminating region;
FIG. 9 is a side view showing a letter discriminating apparatus according to an exemplary embodiment;
FIG. 10 is a front view showing the letter discriminating apparatus of FIG. 9; and
FIG. 11 is a view showing a letter discriminating operation of the letter discriminating apparatus of FIG. 9.

The Embodiment of the present invention as well as the exemplary embodiment will now be described in detail with reference to the accompanying drawings.

### (Embodiment of the present invention)

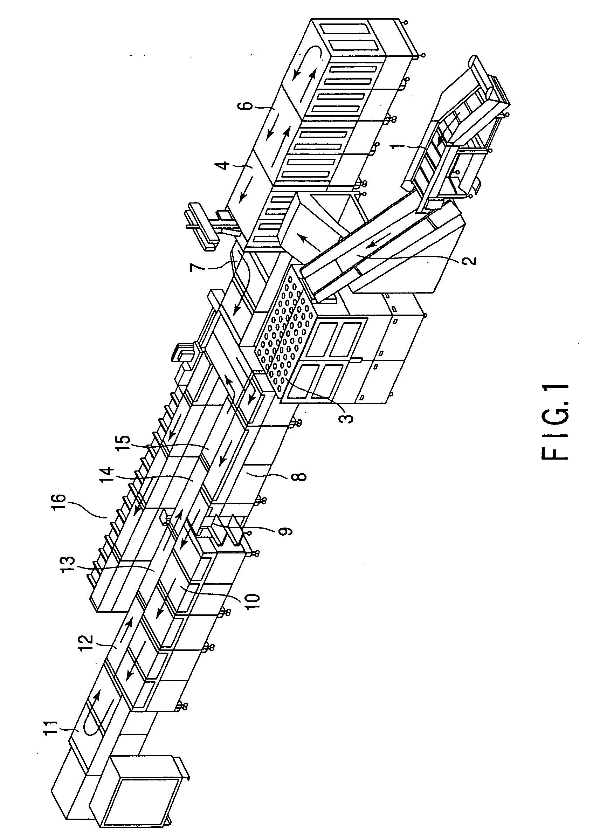

FIG. 1 is a general configuration view showing a mail processor as a paper sheet processing apparatus according to the embodiment of the invention.

In FIG. 1, number 1 denotes a transfer conveyor that conveys a large number of mail letters (hereinafter referred to as letters) as paper sheets to be deposited in a lump. A hopper conveyor 2 for use as a feeding device is provided on the unloading side of the transfer conveyor 1. The hopper conveyor 2 receives and conveys the letters upward.

Provided on the unloading side of the hopper conveyor 2 is a rotary letter discriminating apparatus 3 according to the present invention, which receives letters dropped from the hopper conveyor 2 and discriminates their thicknesses. A takeout device 4 that picks up the letters one by one is disposed on the unloading side of the letter discriminating apparatus 3. The letters picked up from the takeout device 4 are conveyed along a transfer path. A width discriminating section 6, hardness discriminating section 7, thickness detecting section 8, rejection section 9, address reading section 10, switchback section 11, up-down reversal section 12, imprinting section 13, inside-out inversion section 14, barcode reading section 15, and sorting/storing section 16 as a sorting/storing device are successively arranged along the direction in which the letters are conveyed.

The letters that are loaded in a lump onto the transfer conveyor 1 are delivered onto the hopper conveyor 2 as the conveyor 1 runs. As the hopper conveyor 2 runs, the letters are conveyed upward and loaded into the letter discriminating apparatus 3. The letters in the letter discriminating apparatus 3 is checked for thickness and delivered in the manner described in detail later. The delivered letters are picked up one by one by the takeout device 4 and conveyed to the width discriminating section 6, in which they are checked for width. Then, the letters are conveyed to the hardness discriminating section 7, in which they are checked for hardness. The checked or discriminated letters are fed to the thickness detecting section 8, in which they are checked for thickness. Those letters which have thicknesses greater than a predetermined thickness are rejected through the rejection section 9. Those letters which are not rejected are fed to the address reading section 10, in which addresses thereon are read. Thereafter, the accepted letters are conveyed through the switchback section 11 and the up-down reversal section 12 to the imprinting section 13, in which they are imprinted. The imprinted letters are fed through the inside-out inversion section 14 to the barcode reading section 15, in which barcodes thereon are read. Based on the read information, thereafter, the letters are sorted and stored in the sorting/storing section 16.

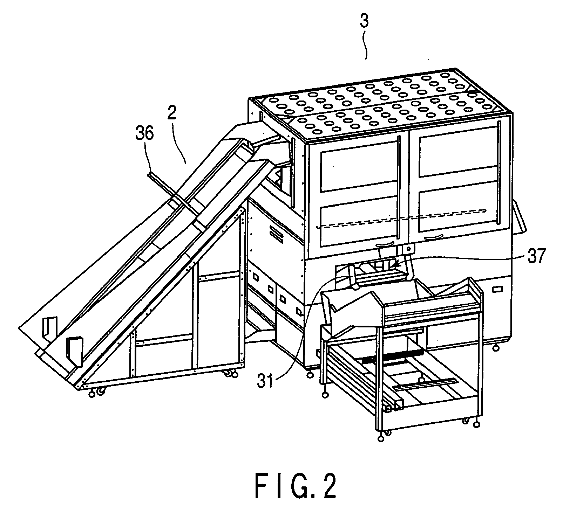

FIG. 2 is an exterior view showing the rotary letter discriminating apparatus 3.

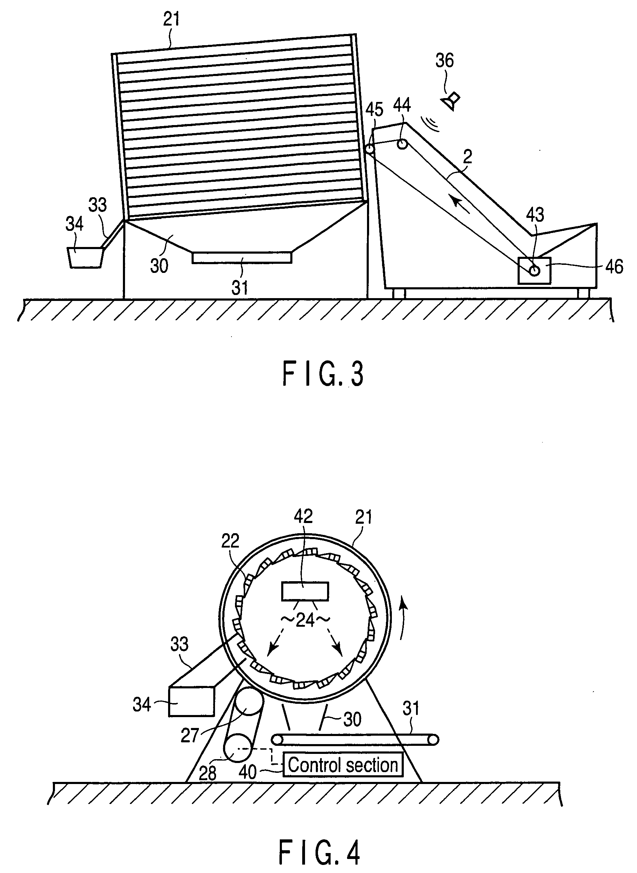

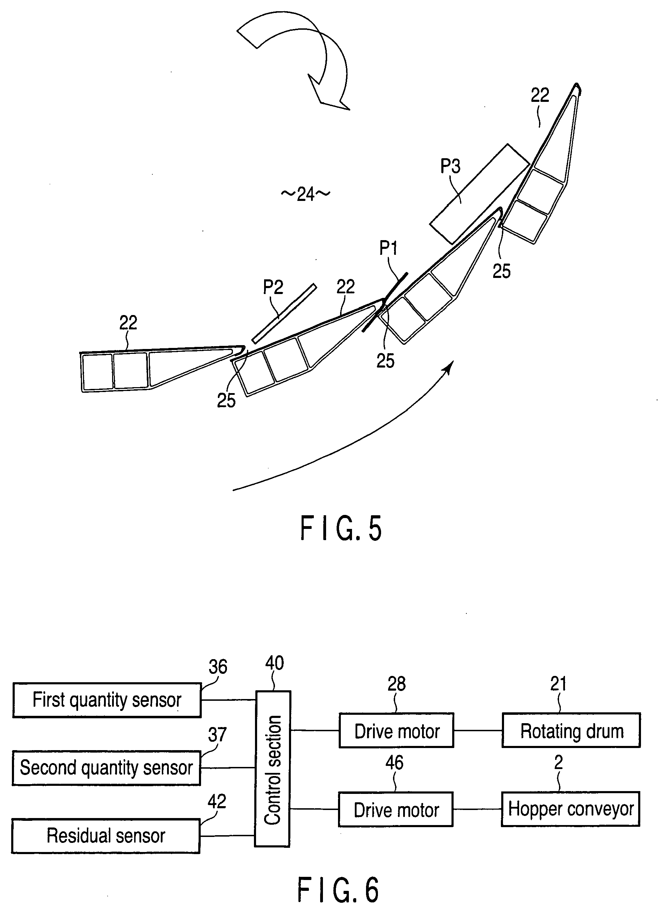

As shown in FIGS. 3 and 4, the letter discriminating apparatus 3 contains a rotating drum 21 therein. Within the drum 21, a plurality of elongated discriminating blades 22 are integrally arranged along its inner peripheral surface. The discriminating blades 22 are arranged in a cylinder to define a discriminating region 24 with their transverse end portions superposed on one another. As shown in FIG. 5, gaps 25 are formed individually at superposed portions of the discriminating blades 22. Although letters P1 and P2 that are thinner than each gap 25 can pass through the gaps 25, letters P3 that are thicker than each gap 25 cannot. As shown in FIG. 4, moreover, a residual sensor 42 for use as a residual detection device that optically detects the quantity of remaining letters is provided in the discriminating region 24.

A drive motor 28 is connected to the rotating drum 21 through a power transmission mechanism 27. The drum 21 is rotated counterclockwise by the motor 28. The discriminating blades 22 are revolved counterclockwise around the center of the discriminating region 24 as the drum 21 rotates. The rotating drum 21 and the discriminating region 24 are tilted so that their letter-receiving side is higher than the non-receiving side. Thus, the letters can be moved along the respective inner bottom surfaces of the blades to the non-receiving side and discharged as the drum 21 rotates.

A chute section 30 that guides the letters P1 and P2 discharged from the rotating drum 21 is provided on the non-receiving side of the drum 21. The chute section 30 is underlain by a transfer conveyor 31 for use as a conveying device that conveys the letters P1 and P2 toward the takeout device 4.

A chute section 33 that guides the letters P3 discharged from the discriminating region 24 is provided on the non-receiving side of the region 24. The chute section 33 is underlain by a storage section 34 that stores the discharged letters P3.

As shown in FIGS. 2 and 3, the hopper conveyor 2 is provided on its top side with a first quantity sensor 36, such as an ultrasonic sensor, for use as a first measuring device that detects the quantity of letters conveyed by the hopper conveyor 2. The transfer conveyor 31 is provided on its top side with a second quantity sensor 37, such as an ultrasonic sensor, for use as a second measuring device that detects the quantity of letters conveyed by the transfer conveyor 31.

As shown in FIG. 3, moreover, the hopper conveyor 2 is passed around and between a driving roller 43 and driven rollers 44 and 45. The driving roller 43 is rotated by the drive motor 46, whereby the hopper conveyor 2 is run in the direction of the arrow.

As shown in FIG. 6, the first and second quantity sensors 36 and 37 and the residual sensor 42 are connected to a control section 40 for use as a control device through a transmitter circuit. The control section 40 is connected with the drive motor 28 for the rotating drum 21 and the drive motor 46 for the hopper conveyor 2 through a control circuit.

The control section 40 is configured to vary the rotational speed of the drive motor 28, thereby increasing or reducing the speed of revolution of the discriminating blades 22, when a predetermined value is exceeded by the detected quantity of letters transmitted from the first quantity sensor 36, that is, when a large number of letters are detected at a time by the sensor 36. Under this speed control, a mass of letters loaded at a time into the discriminating region 24 can be jogged to be broken.

If a predetermined value is exceeded by the detected quantity of letters transmitted from the second quantity sensor 37, moreover, the control section 40 concludes that too great a quantity of letters for the discriminating capacity have been loaded into the discriminating region 24, and stops the discriminating blades 22 from being revolved by the drive motor 28.

Further, the control section 40 is configured to stop the control for varying the rotational speed of the rotating drum 21 when the residual sensor 42 detects remaining letters less than a predetermined quantity.

If remaining letters not less than the predetermined quantity are detected by the residual sensor 42, furthermore, the control section 40 concludes that the loading of the letters from the hopper conveyor 2 is too much, and stops the operation of the drive motor 46 for the hopper conveyor, thereby stopping the loading of the letters.

The following is a description of a discriminating operation of the letter discriminating apparatus 3.

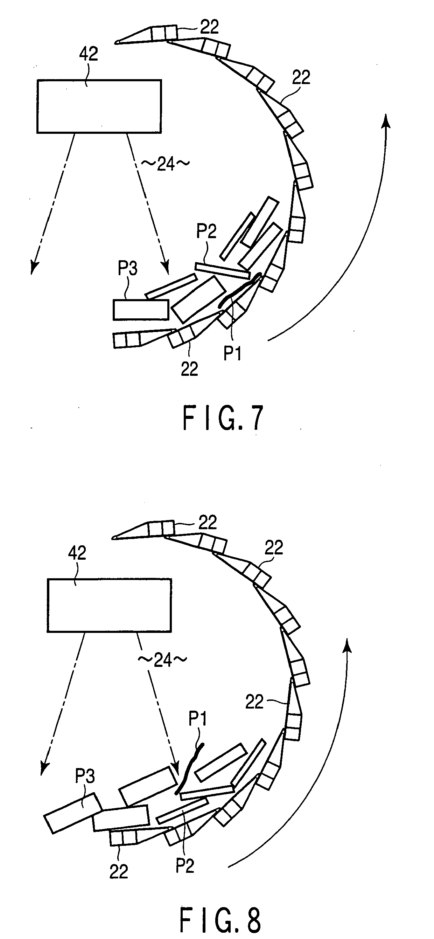

First, the rotating drum 21 is rotated by the drive motor 28 to revolve the discriminating blades 22 counterclockwise around the center of the discriminating region 24. Thereupon, the gaps 25 between the blades 22 are moved forward. As the transfer conveyor 1 and the hopper conveyor 2 run in this state, the plurality of types of letters P1 to P3 of different thicknesses are conveyed and loaded into the discriminating region 24, as shown in FIG. 7.

After the letters P1 to P3 in the discriminating region 24 are dropped onto the discriminating blades 22 that constitute the lower side of the discriminating region 24, they are obliquely scraped up and conveyed as the blades 22 move. Thereupon, the letters P1 to P3 are moved by their own weight toward the gaps 25 between the discriminating blades 22. The letters P1 and P2 that are thinner than the gaps 25 between the blades 22 are delivered from the discriminating region 24 into the rotating drum 21 through the gaps 25. On the other hand, the letters P3 that are thicker than the gaps 25 are guided and discharged to the non-receiving side of the discriminating region 24 without passing through the gaps 25, and are stored into the storage section 34 through the chute section 33. Thus, the thin letters P1 and P2 are discriminated from the thick letters P3.

If a large quantity of letters are loaded in a lump into the discriminating region 24 for the discrimination, the lump of letters cannot be broken even when the discriminating blades 22 are revolved at a constant speed. In this case, the thin letters P1 and P2 are intercepted by the thick letters P3, so that the chances of their reaching the discriminating blades 22 are reduced. Consequently, the thin letters P1 and P2 cannot pass through the gaps 25 between the blades 22 and may possibly be guided and discharged together with the thick letters P3 to the non-receiving side of the discriminating region 24.

According to this embodiment, therefore, the quantity of letters loaded into the discriminating region 24 is detected by the first quantity sensor 36. When the detected quantity exceeds a predetermined value, the control section 40 varies the rotational speed of the drive motor 28, thereby increasing or reducing the speed of revolution of the discriminating blades 22. By doing this, a pile of letters in the discriminating region 24 can be jogged to be broken, as shown in FIG. 8. Thus, the time before the letters P1 and P2 reach the discriminating blades 22 can be shortened, and the chances of their reaching the blades 22 can be increased. In consequence, the thin letters P1 and P2 can be securely delivered from the discriminating region 24 into the rotating drum 21 through the gaps 25.

The thin letters P1 and P2 delivered into the rotating drum 21 are discharged onto the transfer conveyor 31 through the chute section 30 and conveyed to the takeout device 4. On the other hand, the thick letters P3 are discharged from the discriminating region 24 and stored into the storage section 34 through the chute section 33.

If remaining letters not less than the predetermined quantity are detected by the residual sensor 42 during the letter discriminating operation, moreover, the control section 40 concludes that the loading of the letters into the discriminating region 24 by the hopper conveyor 2 is too much, and stops the drive of the drive motor 46 for the hopper conveyor. Thereupon, the travel of the hopper conveyor 2 is stopped, so that the loading of the letters into the discriminating region 24 is stopped.

On the other hand, the quantity of letters conveyed to the takeout device 4 by the transfer conveyor 31 is detected by the second quantity sensor 37. If the predetermined value is exceeded by the quantity of letters detected by the second quantity sensor 37, the control section 40 concludes that too great a quantity of letters for the discriminating capacity have been loaded into the discriminating region 24, and stops the drive of the drive motor 28 to stop the revolution of the discriminating blades 22.

If the quantity of remaining letters in the discriminating region 24, which is detected by the residual sensor 42, is less than the predetermined quantity, the control section 40 concludes that control for varying the speed of revolution of the discriminating blades 22 is unnecessary, and stops the drive of the drive motor 28 to stop the revolution of the blades 22.

According to the embodiment of the invention, as described above, the speed of revolution of the discriminating blades 22 is increased or reduced if it is detected that the quantity of letters loaded into the discriminating region 24 of the rotating drum 21 is greater than a predetermined quantity, so that the lump of letters in the discriminating region 24 can be jogged to be broken. Thus, the time before the letters P1 and P2 reach the discriminating blades 22 can be shortened, and the chances of their reaching the blades 22 can be increased. In consequence, the thin letters P1 and P2 can be securely passed through the gaps 25 and discriminated without increasing the size of the apparatus.

If remaining letters not less than the predetermined quantity are detected by the residual sensor 42 during the letter discriminating operation, moreover, the control section 40 concludes that the loading of the letters into the discriminating region 24 by the hopper conveyor 2 is too much, and stops the loading of the letters. Thus, the letters cannot be jammed in the discriminating region 24.

If the second quantity sensor 37 detects that the quantity of letters discriminated and delivered toward the takeout device 4 is not less than the predetermined quantity, it is concluded that too great a quantity of letters for the discriminating capacity have been loaded into the discriminating region 24, and the drive of the drive motor 28 is stopped. Thus, an appropriate quantity of letters can be fed into the takeout device 4, so that the letters cannot be jammed in a post-processing step.

If the remaining letters in the discriminating region 24 are reduced as the discriminating process progresses, moreover, the control of the drive speed of the drive motor 28 is stopped. Thus, useless drive control can be prevented, so that power consumption can be reduced.

In the embodiment of the invention described above, the lump of letters is broken by varying the rotational speed of the rotating drum 21. Alternatively, however, the lump of letters may be broken by intermittently repeating the start and stop of the operation of the rotating drum 21.

Further, the rotational speed of the rotating drum 21 may be changed automatically and periodically instead of performing the speed control for the drum 21 by measuring the quantity of letters using the first quantity sensor 36.

### (Exemplary Embodiment)

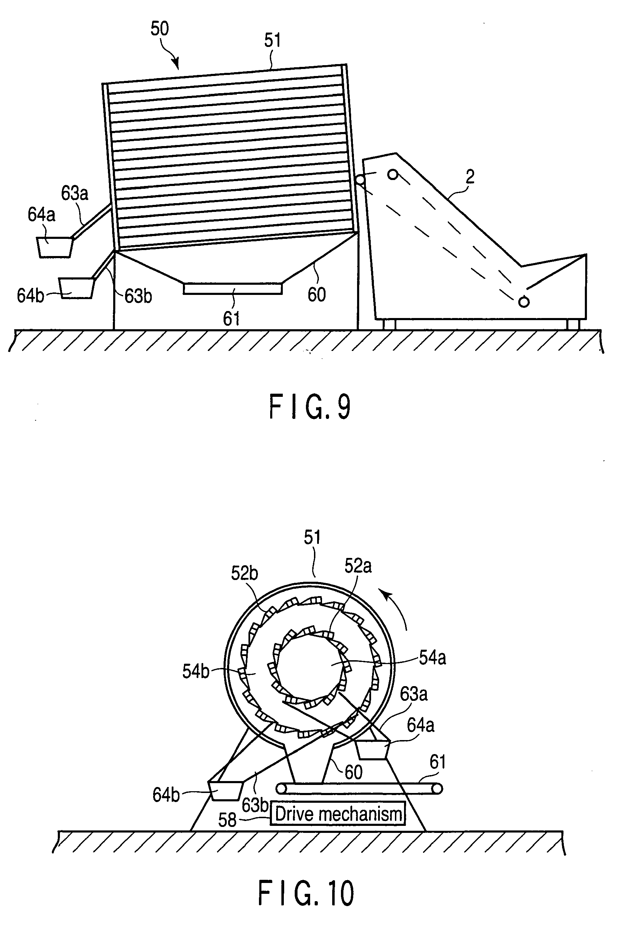

FIG. 9 is a side view showing a rotary letter discriminating apparatus 50 according to an exemplary embodiment, and FIG. 10 is a front view of the apparatus 50.

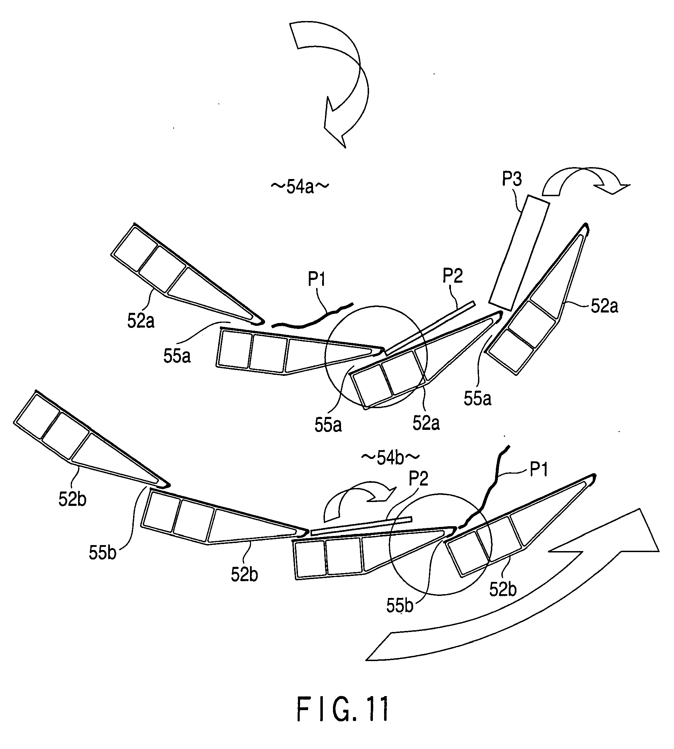

The letter discriminating apparatus 50 contains a rotating drum 51 therein. Within the drum 51, a plurality of elongated first discriminating blades 52a are integrally arranged along its inner peripheral surface. The discriminating blades 52a are arranged in a cylinder to define an inside discriminating region 54a with their transverse end portions superposed on one another. As shown in FIG. 11, first gaps 55a are formed individually at superposed portions of the discriminating blades 52a. Although letters P1 and P2 that are thinner than each first gap 55a are allowed to pass through the gaps 55a, letters P3 that are thicker 25 than each gap 55a are not. Within the rotating drum 51, moreover, a plurality of elongated second discriminating blades 52b are integrally arranged along its inner peripheral surface so as to be situated outside the elongated discriminating blades 52a. The second discriminating blades 52b are arranged in a cylinder to define an outside discriminating region 54b with their transverse end portions superposed on one another. As shown in FIG. 11, second gaps 55b that are narrower than the first gaps 55a are formed individually at superposed portions of the discriminating blades 52b. Although the letters P1 that are thinner than each second gap 55b are allowed to pass through the gaps 55b, the letters P2 that are thicker than each gap 55b are not.

For example, the thick letters P3 are postal matter of corrugated cardboard, the moderately thick letters P2 are relatively thick sealed letters, and the thin letters P1 are postcards.

On the other hand, the rotating drum 51 is connected with a drive mechanism 58 for use as a drive device, whereby the drum 51 is rotated counterclockwise. The first and second discriminating blades 52a and 52b are revolved around the center of the inside and outside discriminating regions 54a and 54b as the rotating drum 51 rotates.

The rotating drum 51 and the inside and outside discriminating regions 54a and 54b are tilted so that their letter-receiving side is higher than the non-receiving side. Thus, the letters can be moved along the respective inner bottom surfaces of the blades to the non-receiving side and discharged as the drum 51 rotates.

A chute section 60 that guides the letters P1 discharged from the rotating drum 51 is provided on the non-receiving side of the drum 51. The chute section 60 is underlain by a transfer conveyor 61 for use as a conveying device that conveys the letters P1 toward the takeout device 4.

Further, a chute section 63a that guides the letters P3 discharged from the inside discriminating region 54a is provided on the non-receiving side of the region 54a. The chute section 63a is underlain by a first storage section 64a for use as a first storage device that stores the letters P3.

Furthermore, a chute section 63b that guides the letters P2 discharged from the outside discriminating region 54b is provided on the non-receiving side of the region 54b. The chute section 63b is underlain by a second storage section 64b for use as a second storage device that stores the letters P2.

The following is a description of a discriminating operation of the letter discriminating apparatus 50 constructed in this manner.

First, the rotating drum 51 is rotated by the drive mechanism 58 to revolve the first and second discriminating blades 52a and 52b that constitute the inside and outside discriminating regions 54a and 54b, thereby moving the first and second gaps 55a and 55b. As the transfer conveyor 61 and the hopper conveyor 2 run in this state, the plurality of types of letters P1 to P3 of different thicknesses are conveyed and loaded into the inside discriminating region 54a, as shown in FIG. 11. After the letters P1 to P3 in the inside discriminating region 54a are dropped onto the discriminating blades 52a that constitute the lower side of the discriminating region 54a, they are obliquely scraped up and conveyed as the blades 52a revolve. Thereupon, the letters P1 to P3 are moved by their own weight toward the first gaps 55a between the discriminating blades 52a. Then, the letters P1 and P2 that are thinner than the first gaps 55a between the discriminating blades 52a, out of all the letters P1 to P3, are delivered from the inside discriminating region 54a to the outside discriminating region 54b through the first gaps 55a. Further, the letters P3 that are thicker than the first gaps 55a are guided and discharged along the discriminating blades 52a of the inside discriminating region 54a to the exit side, and are stored into the first storage section 64a through the chute section 63a. Thus, the thin letters P1 and P2 are first discriminated from the thick letters P3.

After the letters P1 and P2 delivered to the outside discriminating region 54b are dropped onto the discriminating blades 52b that constitute the lower side of the discriminating region 54b, they are obliquely scraped up and conveyed as the blades 52a revolve. Thereupon, the letters P1 and P2 are moved by their own weight toward the second gaps 55b between the discriminating blades 52b. Then, only the letters P1 that are thinner than the second gaps 55b between the discriminating blades 52b, out of the letters P1 and P2, are delivered from the outside discriminating region 54b into the rotating drum 51 through the second gaps 55b. Further, the letters P2 that are thicker than the second gaps 55b are guided and discharged along the discriminating blades 52b of the outside discriminating region 54b to the exit side, and are stored into the second storage section 64b through the chute section 63b.

The letters P1 that are delivered from the outside discriminating region 54b into the rotating drum 51 are delivered to the transfer conveyor 61 through the chute section 60 and conveyed to the takeout device 4.

According to the exemplary embodiment, as described above, the inside and outside discriminating regions 54a and 54b are arranged within the rotating drum 51. After the thick letters P3 and the letters P1 and P2 thinner than the letters P3 are discriminated in the inside discriminating region 54a, the moderately thick letters P2 and the letters P1 thinner than the letters P2 are discriminated in the outside discriminating region 54b. In other words, the letters are discriminated again in the outside discriminating region 54b after they are roughly discriminated. Even if a large quantity of letters are loaded in a lump, therefore, they can be discriminated without increasing the size of the discriminating apparatus. Further, the three types of thicknesses of the letters can be discriminated without using a plurality of discriminating apparatuses.

Thus, the equipment cost can be reduced, and in addition, the arrangement space can be reduced considerably.

The present invention is not limited to the embodiment described above, and its components may be embodied in modified forms within the scope of the appended claims.

## Claims

1. A paper sheet discriminating apparatus, comprising:
a rotating drum (21);
a plurality of discriminating blades (22) which are arranged in a cylinder within the rotating drum (21) along an inner peripheral surface thereof, to define a discriminating region (24) which is loaded with a plurality of paper sheets (P1, P2, P3) of different thicknesses, transverse end portions of the discriminating blades (22) being superposed with gaps (25) therebetween;
a drive device (28) which rotates the rotating drum (21) to revolve the discriminating blades (22) around the center of the discriminating region (24), thereby causing those paper sheets (P1, P2) which are thinner than the gaps (25), out of the paper sheets (P1, P2, P3) of the different thicknesses in the discriminating region (24), to pass through the gaps (25); and
a control device (40) which is adapted to perform control to change a rotating state of the rotating drum (21) driven by the drive device (28),
**characterized by** further comprising a first measuring device (36) which is adapted to measure the quantity of paper sheets loaded into the discriminating region (24) of the rotating drum (21) and a second measuring device (37) which is adapted to measure the quantity of paper sheets (P1, P2) delivered through the gaps (25) between the discriminating blades (22), and in that the control device (40) is adapted to perform control to change the rotating state of the rotating drum (21) as a quantity of paper sheets (P1, P2, P3) not less than a predetermined quantity are measured by the first measuring device (36) and is adapted to perform control to stop rotation of the rotating drum (21) as a quantity of paper sheets (P1, P2) not less than a predetermined quantity are measured by the second measuring device (37).

2. A paper sheet discriminating apparatus according to claim 1, **characterized in that** the control device (40) controls the rotating drum (21) so that the rotating drum (21) varies in rotational speed or rotates intermittently or reversibly.

3. A paper sheet discriminating method, comprising:
arranging a plurality of discriminating blades (22) in a cylinder within a rotating drum (21) along an inner peripheral surface thereof, to define a discriminating region (24), such that transverse end portions of the discriminating blades (22) are superposed with gaps (25) therebetween, and loading the discriminating region (24) with a plurality of paper sheets (P1, P2, P3) of different thicknesses;
rotating the rotating drum (21) by means of a drive device (28) to revolve the discriminating blades (22) around the center of the discriminating region (24), thereby causing those paper sheets (P1, P2) which are thinner than the gaps (25), out of the paper sheets (P1, P2, P3) of the different thicknesses in the discriminating region (24), to pass through the gaps (25); and
performing control to change a rotating state of the rotating drum (21) driven by the drive device (28);
**characterized by** further comprising:
measuring the quantity of paper sheets loaded into the discriminating region (24) of the rotating drum (21) by a first measuring device (36) and measuring the quantity of paper sheets (P1, P2) delivered through the gaps (25) between the discriminating blades (22) by a second measuring device (37), and by performing control to change the rotating state of the rotating drum (21) as a quantity of paper sheets (P1, P2, P3) not less than a predetermined quantity are measured by the first measuring device (36) and performing control to stop rotation of the rotating drum (21) as a quantity of paper sheets (P1, P2) not less than a predetermined quantity are measured by the second measuring device (37).

## Patentansprüche

1. Papierbogenunterscheidungsvorrichtung, mit:
einer Rotationstrommel (21);
einer Vielzahl an Unterscheidungsflügeln (22), welche in einem Zylinder innerhalb der Rotationstrommel (21) entlang einer inneren Umfangsoberfläche davon angeordnet sind, um einen Unterscheidungsbereich (24) zu definieren, welcher mit einer Vielzahl an Papierbögen (P1, P2, P3) mit unterschiedlichen Dicken beladen ist, wobei transversale Endabschnitte der Unterscheidungsflügel (22) mit Aussparungen (25) dazwischen überlagert sind;
einer Antriebsvorrichtung (28), welche die Rotationstrommel (21) dreht, um die Unterscheidungsflügel (22) um die Mitte des Unterscheidungsbereichs (24) herum umlaufen zu lassen, wobei dadurch verursacht wird, dass jene Papierbögen (P1, P2), welche dünner als die Aussparungen (25) sind, aus den Papierbögen (P1, P2, P3) mit den unterschiedlichen Dicken in dem Unterscheidungsbereich (24), durch die Aussparungen (25) durchgehen; und
einer Steuervorrichtung (40), welche angepasst ist, um eine Steuerung durchzuführen, um einen Rotationszustand der durch die Antriebsvorrichtung (28) angetriebenen Rotationstrommel (21) zu ändern,
**dadurch gekennzeichnet, dass** sie ferner aufweist
eine erste Messvorrichtung (36), welche angepasst ist, um die Quantität von in den Unterscheidungsbereich (24) der Rotationstrommel (21) geladenen Papierbögen zu messen, und eine zweite Messvorrichtung (37), welche angepasst ist, um die Quantität von durch die Aussparungen (25) zwischen den Unterscheidungsflügeln (22) gelieferten Papierbögen (P1, P2) zu messen, und dadurch, dass die Steuervorrichtung (40) angepasst ist, eine Steuerung durchzuführen, um den Rotationszustand der Rotationstrommel (21) zu ändern, wenn eine Quantität von Papierbögen (P1, P2, P3), nicht weniger als eine vorbestimmte Quantität, durch die erste Messvorrichtung (36) gemessen wird, und angepasst ist, um eine Steuerung durchzuführen, um eine Rotation der Rotationstrommel (21) anzuhalten, wenn eine Quantität von Papierbögen (P1, P2), nicht weniger als eine vorbestimmte Quantität, durch die zweite Messvorrichtung (37) gemessen wird.

2. Papierbogenunterscheidungsvorrichtung nach Anspruch 1, **dadurch gekennzeichnet, dass** die Steuervorrichtung (40) die Rotationstrommel (21) so steuert, dass sich die Rotationstrommel (21) in einer Rotationsgeschwindigkeit unterscheidet oder sich intermittierend oder reversierbar dreht.

3. Papierbogenunterscheidungsverfahren, umfassend:
Anordnen einer Vielzahl an Unterscheidungsflügeln (22) in einem Zylinder innerhalb einer Rotationstrommel (21) entlang einer inneren Umfangsoberfläche davon, um einen Unterscheidungsbereich (24) zu definieren, derart dass transversale Endabschnitte der Unterscheidungsflügel (22) mit Aussparungen (25) dazwischen überlagert sind, und Beladen des Unterscheidungsbereichs (24) mit einer Vielzahl an Papierbögen (P1, P2, P3) mit unterschiedlichen Dicken;
Drehen der Rotationstrommel (21) mittels einer Antriebsvorrichtung (28), um die Unterscheidungsflügel (22) um die Mitte des Unterscheidungsbereichs (24) herum umlaufen zu lassen, wobei dadurch verursacht wird, dass jene Papierbögen (P1, P2), welche dünner als die Aussparungen (25) sind, aus den Papierbögen (P1, P2, P3) mit den unterschiedlichen Dicken in dem Unterscheidungsbereich (24), durch die Aussparungen (25) durchgehen; und
Durchführen einer Steuerung, um einen Rotationszustand der durch die Antriebsvorrichtung (28) angetriebenen Rotationstrommel (21) zu ändern;
**dadurch gekennzeichnet, dass** es ferner umfasst:
Messen der Quantität von in den Unterscheidungsbereich (24) der Rotationstrommel (21) geladenen Papierbögen durch eine erste Messvorrichtung (36), und Messen der Quantität von durch die Aussparungen (25) zwischen den Unterscheidungsflügeln (22) gelieferten Papierbögen (P1, P2) durch eine zweite Messvorrichtung (37), und durch Durchführen einer Steuerung, um den Rotationszustand der Rotationstrommel (21) zu ändern, wenn eine Quantität von Papierbögen (P1, P2, P3), nicht weniger als eine vorbestimmte Quantität, durch die erste Messvorrichtung (36) gemessen wird, und Durchführen einer Steuerung, um eine Rotation der Rotationstrommel (21) anzuhalten, wenn eine Quantität von Papierbögen (P1, P2), nicht weniger als eine vorbestimmte Quantität, durch die zweite Messvorrichtung (37) gemessen wird.

## Revendications

1. Appareil de séparation de feuilles de papier comprenant :
un tambour rotatif (21) ;
une pluralité de lames de séparation (22) qui sont agencées dans un cylindre au sein du tambour rotatif (21) sur sa surface périphérique interne, afin de définir une région de séparation (24) qui est chargée avec une pluralité de feuilles de papier (P1, P2, P3) d'épaisseurs différentes, les parties d'extrémité transversale des lames de séparation (22) étant superposées avec des espaces (25) entre elles ;
un dispositif d'entraînement (28) qui fait tourner le tambour rotatif (21) pour faire tourner les lames de séparation (22) autour du centre de la région de séparation (24), de façon à faire en sorte que les feuilles de papier (P1, P2) qui sont plus minces que les espaces (25), parmi les feuilles de papier (P1, P2, P3) d'épaisseurs différentes dans la région de séparation (24), traversent les espaces (25) ; et
un dispositif de commande (40) qui est adapté à effectuer une commande pour modifier l'état de rotation du tambour rotatif (21) entraîné par le dispositif d'entraînement (28),
**caractérisé en ce qu'**il comprend en outre un premier dispositif de mesure (36) qui est adapté à mesurer la quantité de feuilles de papier chargées dans la région de séparation (24) du tambour rotatif (21) et un second dispositif de mesure (37) qui est adapté à mesurer la quantité de feuilles de papier (P1, P2) délivrées à travers les espaces (25) entre les lames de séparation (22), et **en ce que** le dispositif de commande (40) est adapté à effectuer une commande pour modifier l'état de rotation du tambour rotatif (21) lorsqu'une quantité de feuilles de papier (P1, P2, P3) supérieure ou égale à une quantité prédéterminée est mesurée par le premier dispositif de mesure (36) et est adapté à effectuer une commande pour arrêter la rotation du tambour rotatif (21) lorsqu'une quantité de feuilles de papier (P1, P2) supérieure ou égale à une quantité prédéterminée est mesurée par le second dispositif de mesure (37).

2. Appareil de séparation de feuilles de papier selon la revendication 1, **caractérisé en ce que** le dispositif de commande (40) commande le tambour rotatif (21) de sorte que la vitesse de rotation du tambour rotatif (21) varie ou qu'il tourne par intermittence ou de façon réversible.

3. Procédé de séparation de feuilles de papier comprenant :
l'agencement d'une pluralité de lames de séparation (22) dans un cylindre au sein d'un tambour rotatif (21) sur sa surface périphérique interne, afin de définir une région de séparation (24), de sorte que les parties d'extrémité transversale des lames de séparation (22) sont superposées avec des espaces (25) entre elles et le chargement de la région de séparation (24) avec une pluralité de feuilles de papier (P1, P2, P3) d'épaisseurs différentes ;
la rotation du tambour rotatif (21) au moyen d'un dispositif d'entraînement (28) pour faire tourner les lames de séparation (22) autour du centre de la région de séparation (24), de façon à faire en sorte que les feuilles de papier (P1, P2) qui sont plus minces que les espaces (25), parmi les feuilles de papier (P1, P2, P3) d'épaisseurs différentes dans la région de séparation (24), traversent les espaces (25) ; et
l'exécution d'une commande pour modifier l'état de rotation du tambour rotatif (21) entraîné par le dispositif d'entraînement (28),
**caractérisé en ce qu'**il comprend en outre :
la mesure de la quantité de feuilles de papier chargées dans la région de séparation (24) du tambour rotatif (21) au moyen d'un premier dispositif de mesure (36) et la mesure de la quantité de feuilles de papier (P1, P2) délivrées à travers les espaces (25) entre les lames de séparation (22) au moyen d'un second dispositif de mesure (37), et en effectuant une commande pour modifier l'état de rotation du tambour rotatif (21) lorsqu'une quantité de feuilles de papier (P1, P2, P3) supérieure ou égale à une quantité prédéterminée est mesurée par le premier dispositif de mesure (36) et en effectuant une commande pour arrêter la rotation du tambour rotatif (21) lorsqu'une quantité de feuilles de papier (P1, P2) supérieure ou égale à une quantité prédéterminée est mesurée par le second dispositif de mesure (37).
